Europäisches Patentamt

European Patent Office  (11) Publication number: **0 031 443**

Office européen des brevets  **A1**

(12) **EUROPEAN PATENT APPLICATION**

(21) Application number: **80107153.1**

(22) Date of filing: **18.11.80**

(51) Int. Cl.³: **G 01 S 13/52, G 01 S 15/52**

(30) Priority: **28.12.79 US 107816**

(43) Date of publication of application: **08.07.81** Bulletin 81/27

(84) Designated Contracting States: **DE FR GB**

(71) Applicant: **International Business Machines Corporation, Armonk, N.Y. 10504 (US)**

(72) Inventor: **Blahut, Richard Edward, 276 Ridgefield Road, Endicott New York, 13760 (US)**

(74) Representative: **Jost, Ottokarl, Dipl.-Ing., Schönaicher Strasse 220, D-7030 Böblingen (DE)**

(54) **Apparatus for detecting a moving target and method therefor.**

(57) A radar system which utilizes the combined techniques of interferometric clutter discrimination and synthetic aperture imaging is disclosed as is the method for effecting clutter notching using the combined techniques. Two antennas (12, 14), spaced apart by a predetermined number of wavelengths, receive return signals which are processed into a fine grid of range and doppler cells, including the relative phase difference of each which is a measure of the angle ($\Theta$, $\Theta$) of arrival of the respective signals, to form an uncompensated complex image plane (24, 30) of the target area scene by each of the antennas. The clutter signals of only one image plane are then phase shifted by the measure of their angle of arrival and subsequently summed, cell-by-cell, with the signals of the other image plane to form a clutter-free moving-target image plane.

- 1 -

## APPARATUS FOR DETECTING A MOVING TARGET AND METHOD THEREFOR

This invention relates for an apparatus for detecting a moving target and a method therefor.

In the past, radar systems for the detection of moving targets have employed doppler filtering techniques. Such radar systems, called MTI radars for moving target indication, must cope with extraneous radar returns called clutter which arise from the numerous reflectors within the radar beam. When the range is large, these returns can vastly exceed, and therefore mask, the returns from a target of interest.

Thus, clutter returns must be suppressed before a target can be "seen" by a radar system. For ground based MTI radars, the doppler shift on a signal from a moving target has been used to sort the target signal out. Doppler filtering has also been employed on airborne MTI systems to filter out the signals from rapidly moving targets.

Subsequently, the requirements for MTI systems shifted to moving airborne radar stations for observing small, slowly moving target objects on the ground at large range. In such a case, the indicidual cutter returns themselves can and do exhibit a complicated doppler history. It was found that in these instances it was no longer possible to sort the targets simply using doppler based techniques.

In United States Patent No. 3,594,794 to H. Halpern, an attempt at improved clutter discrimination is effected in a phase interferometric radar system by varying the transmitted frequency and averaging resultant fluctuations from the mean angle of return within a large number of range intervals. This system, however, requires constant switching of frequency circuits for each transmission and its accuracy depends upon pattern matching of the two antennas used therin. In addition, this system carries a heavy, time-consuming computational load.

Interferometric clutter notching, as used herein, is a technique that employs both angle and doppler returns interdependently to filter targets from a clutter background. The technique combines interferometry, doppler processing and synthetic imaging theory. Utilization of this technique allows examination of every possible return, i.e. - the radial velocity, range and azimuth, in a sequential manner for each case. This however, is time consuming to perform at the receiver front end. If the signal received by each of the dual antennas is recorded, the same signal can be recycled many times to examine, in turn, each radial velocity, range and azimuth. This procedure is computationally time consuming.

Accordingly, it is a principal object of the present invention to provide an interferometric radar system which is adapted to overcome the time and/or computational burdens of prior art systems.

It is also a primary object of the present invention to efficiently eliminate clutter returns from a target scene which may include a slowly moving target.

The above objects are met for an apparatus for detecting moving targets by the features of claim 1. Advantageous embodiments are specified in claims 2 and 3. A method for achieving these objects of the invention is characterized by claim 4. Further improvements of this method are contained in claims 5 and 6.

EN 979 026

- 3 -

The advantage of the invention is that interferometric radar systems can be built which operate faster and more reliable than the prior art systems.

Figure 1 schematically illustrates the technique of interferometric cutter discrimination; and

Figure 2 schematically depicts the technique of interferometric clutter notching in accordance with the present invention.

In order to avoid undue burdening of this description with matter and specific details within the knowledge of those skilled in this art, a functional block diagram approach is employed, in part, herein. Where appropriate, a detailed functional description of each block or element is given together with specific identification of the device represented if necessary. Any individual reader is thus free to consult any of the presently available textbooks or treatises for a more specific detailed description of these well known blocks. The reader is referred, in particular, to "Introduction to Radar Systems" by Merrill I. Skolnik, published by McGraw-Hill Book Company in 1962 "Radar Design Principles" by Fred E. Nathanson, published by McGraw-Hill Book Company in 1969; and "Antenna Engineering Handbook" by Henry Jasik, published by McGraw-Hill Book Company published in 1961, all of which are incorporated herein by reference.

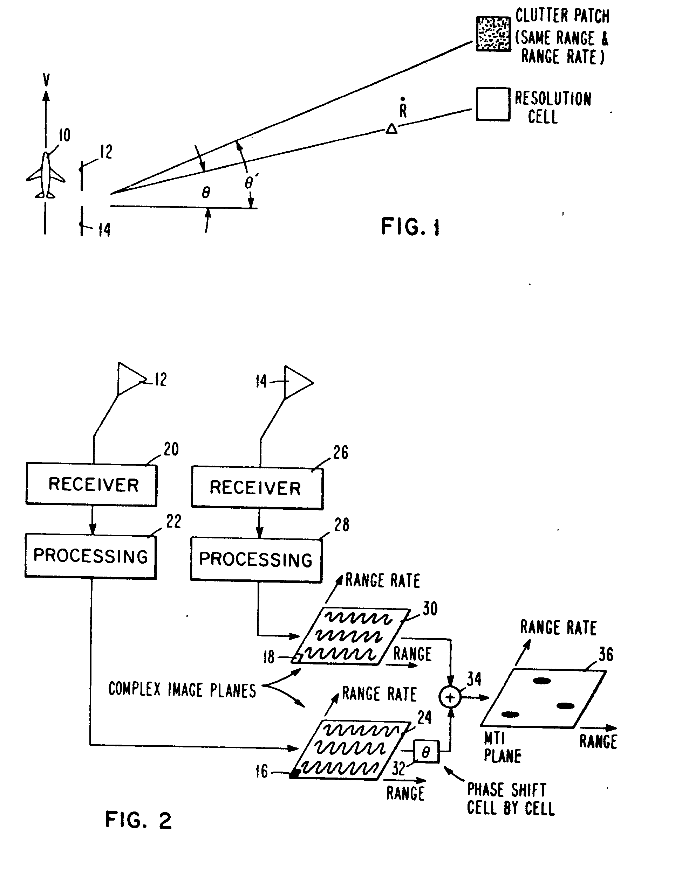

Turning now to the drawings wherein like reference numerals have been used in the several views to identify like elements, Figure 1 schematically illustrates the technique of interferometric clutter discrimination. An interferometer is a device for measuring the angle of arrival of a signal by using the phase of the signal as received by two or more adjacent antennas. In this instance, a plane 10 carrying two

EN 979 026

adjacent antennas 12 and 14, which are separated by a predetermined number of wavelengths, uses its airborne radar system of which the antennas are a part to illuminate a target scene. A return signal incident at angle θ on antennas 12 and 14 which are spaced by d, gives a phase difference

$$\Delta\phi = 2\pi \frac{d}{\lambda} \ Sin\theta$$

This equation can be inverted to find θ from a measurement of Δφ, possibly with one or more ambiguities. As previously alluded to, instead of measuring direction directly, one can also phase shift and add the two signals together, at the front end of the radar system, so as to form some desirable antenna pattern perhaps with a null in a certain direction. This strategy, however, as noted above, places a heavy computational and or time load on the system.

Assuming that we wish to detect a target at range R, angle θ and velocity in the range direction $\dot{R}$, then any object at different coordinates is not of interest. The only clutter that will fall into the same range-doppler cell is that coming from ground reflectors at the same range R and velocity in the range direction $\dot{R}$ (plus or minus the resolution width). But this clutter patch 16 is at a different return angle θ than its corresponding range doppler cell 18 and can therefore be interferometrically nulled. That is, from Figure 1, the target has relative velocity

$$V_r = V \ Sin\theta + \dot{R} \qquad (1)$$

and the clutter has relative velocity

$$V_r = V \ Sin\theta'. \qquad (2)$$

Consequently, the clutter is, combining equations (1) and (2), at angle

$$Sin\theta' = Sin\theta + \dot{R}/V.$$

EN 979 026

Interferometric combination of the two antenna signals to put a notch or null on the clutter is possible given a signal from the target of the form

$$g'(t) = g(t)e^{-j2\pi fot}Sin\left[\pi(d/\lambda)\,(Sin\,\theta-Sin\,\theta')\right] \qquad (3)$$

$$\text{or} \qquad = g(t)e^{-j2\pi fot}Sin\left[\pi(d/\lambda)\,(\dot{R}/V)\right] \qquad (4)$$

where g'(t) is the complex envelope of the received signal, $\lambda$ is the antenna wavelength and fo is the carrier frequency.

The signal from the target is attenuated by the notch. As $\dot{R}$ goes to zero, the signal goes to zero, but for reasonable choices of d and $\lambda$, the attenuation is acceptable for velocities as small as 3,2 km)h (two miles per hour). In practice, there is little or no interest in only one set of coordinates $(R,\theta,\dot{R})$. Hence, for each combination or cell couple, a notch must be formed. It would therefore be possible to sweep a notch through all of the possibilities, but such a sequential search is prohibitive in time. Alternatively, it is possible to record the received signal at each antenna, then recycle it repeatedly, each time notching for another hypothesized set of coordinates. Unfortunately, this requires enormous processing capabilities. Instead, we can rely on a technique which utilizes interferometric discrimination in a manner that minimizes time and/or computational system loading.

A synthetic aperture image is an image formed, in this instance, by dividing the received signal with filters into a fine grid of range cells and doppler cells. The magnitude of the signal in each rectangular cell is displayed or utilized for detection purposes. Besides a magnitude, the signal in each range or doppler cell also has a phase angle.

- 6 -

This phase angle is discarded in the classical MTI or synthetic aperture imaging radar system.

Synthetic aperture interferometry is a combination of the techniques of synthetic aperture imaging and interferometry. The antennas 12 and 14 are separated by a predetermined number of wavelengths.  The signals from the two antennas are each processed to form a complex image. The relative phase difference between the corresponding range and doppler cells in the two channels provides an interferometric measure of the angle of arrival of the signals in any particular range-doppler cell combination.

It may happen that a particular range-doppler cell combination has several signal sources therein.  This can occur if one signal is an echo from a fixed reflector and a second signal is an echo from a second, moving reflector.  In fact, this is just the case that was considered previously. The relative phase angle is the same relative phase that was present at the antennas.  The interferometric computation can be performed just as well after the range-doppler cell sorting as before since all computations are linear. Performing such computations after sorting, however, is much simpler since any filtering operation is done only twice.

Let $s(t)$ be the complex envelope of the transmitted signal and let $g(t)$ be the complex envelope of the received waveform.  The cross-ambiguity function is

$$\chi(\tau, \nu) = \int s(t)\, g^*(t-\tau)\, e^{-j2\pi\nu t}\, dt.$$

With two antennas, two signals are received and two such surfaces, $\chi_a(\tau, \nu)$ and $\chi_b(\tau, \nu)$ are computed. A target will

give a peak response at a value of $\tau, \nu$ related to R, $\theta$, and $\dot{R}$ by

$$\tau = 2R$$

$$\nu = 2 \frac{fo}{c} (V \sin \theta + \dot{R})$$

Many combinations of $\theta$ and $\dot{R}$ yield the same value of doppler $\nu$. We assume that there is a moving vehicle at only one of these combinations at the same time. However, on rare occasions, two moving vehicles may mask each other.

To notch the clutter, define the clutter-free ambiguity function

$$\chi(\tau, \nu) = \chi_a(\tau, \nu) e^{j\pi\Delta\phi} - \chi_b(\tau, \nu) e^{-j\pi\Delta\phi},$$

where $\Delta\phi$ is the phase angle difference of the clutter at the two antennas. That is

$$\Delta\phi = (d/\lambda) \sin \theta',$$
$$= (d/\lambda)(\sin \theta + \dot{R}/V), \text{ and}$$
$$= \frac{d}{2V} \nu.$$

Finally, choose a discrete $\tau, \nu$ grid,

$$\tau = k\Delta\tau \qquad \text{and} \qquad \nu = r\Delta\nu.$$

Then, the computation is

$$\chi(k,r) = \chi_a(k,r) e^{j\alpha r} - \chi_b(k,r) e^{-j\alpha r},$$

where

$$\alpha = \pi \frac{d}{2V} \nu.$$

EN 979 026

This completes the clutter notching. Notice that the problem has been set up so that all computations are on the same (k,r) grid. No interpolation is necessary.

The clutter notch depth is dictated by the lowest of two calculations;clutter notch depth to suppress general noise like background clutter;and clutter notch depth to suppress occasional objects of large cross section. The system can then operate against a background consisting of a distributed reflector of low cross section density such as roads, fields and forests plus occasional objects of large radar cross section.

A block diagram of a radar system which would operate in accordance with the combinational approach described above is schematically depicted in Figure 2. The signals received at antenna 12 are acted upon by a receiver 20 which enhances the received signal in a desired optimum manner and suppress undesired signals including noise in a classical manner. More specifically, the receiver strips the target scene information from its carrier, filters and amplifies it as necessary and reduces it to a working frequency. The optimized received signal is then forwarded to a processing circuit 22 where the coordinate information and target information is extracted on a cell-by-cell basis to form a complex image plane 24, which in this instance can be assumed to be a complex image plane or grid of clutter patch cells. The overall grid 24 has an ordinate of range rate and an abcissa of range which precisely locates the constituent clutter cells 16 thereof. Similarly, the received signal from antenna 14 is acted upon by receiver 26 and processing circuit 28 to form a complex image plane 30 of the doppler cells 18.

The cells of one of the complex image planes is then phase shifted on a cell-by-cell basis by a phase shifting circuit 32. In this instance, phase shifting of the clutter-cells complex image plane 24 has been chosen, but it will be understood that appropriate phase shifting of the complex image plane 30 could have been alternatively performed. The signals from the complex image planes 24 and 30, after phase shifting has occurred, are then combined in a summing circuit 34, where the clutter signals in corresponding cells, when present, are cancelled leaving only the target information in a combined MTI plane 36. It should be noted that the information which comprises the complex image planes 24 and 30 can be digitized by a standard A/D converter (not shown) and that the phase shifting and summing operations can be software implemented if desired.

While the present invention has been described in the context of a preferred embodiment thereof, it will be readily apparent to those skilled in the art, that modifications and variations can be made therein without departing from the spirit and scope of the present invention. Accordingly, it is not intended that the present invention be limited to the specifics of the foregoing description of the preferred embodiment, but rather as being limited only by the scope of the invention as defined in the claims appended hereto.

EN 979 026

- 10 -

PATENT CLAIMS

1. Apparatus for detecting a moving target, said apparatus comprising:

a) first (12) and second (14) antennas for each receiving a reflected radar signal from a target scene, said antennas being spaced apart by a predetermined number of wavelengths;

b) first (20) and second (26) receiving circuit means, operatively coupled respectively to said first and second antennas, for receiving returned radar signals and for extracting target scene information therefrom;

c) first (22) and second (28) processing circuit means, operatively coupled respectively to said first and second receiving circuit means, for processing the extracted target scene information signals into signals representative respectively of a grid of range cells and doppler cells, each of said cells having different range and range rate coordinates and containing clutter and a possible target signal and comprising respectively in sum a complex image range plane (24) and a complex image doppler plane (30) of the target area;

d) notching circuit means (32), operatively coupled to receive signals from only one of said first and second processing circuit means, for phase shifting said clutter signals thereof by the measure of their angle of arrival at said antenna originally receiving same; and

e) summing circuit means (34), operatively coupled to receive said phase shifted signals of said notching circuit means and said signals of the other of said first and second processing circuit means, for combining said signals, cell-by-cell, to form a clutter free moving target image plane (36).

EN 979 026

2. The apparatus according to claim 1 which additionally comprises an analog-to-digital converter, coupled to the output of said summing circuit means (34), for digitizing the output thereof to prepare same for digital processing.

3. The apparatus according to claim 1 wherein said first (22) and second (28) processing circuit means are adapted to include the range return angle and velocity in the range direction of reflections perceived in each of said cells in their respective outputs.

4. A method for detecting the presence of a moving target in a target scene, said method comprising the steps of:

   a) providing two antennas (12, 14), each spaced from the other by a predetermined number of wavelengths;

   b) processing target scene information signals received at each of the two antennas into signals representative respectively of a grid of range cells and doppler cells, each of said cells having different range and range rate coordinates and containing clutter and a complex image doppler plane (30) of the target scene;

   c) phase shifting the clutter signals in one of the complex image planes (24 or 30) by the measure of their angle of arrival at the antenna originally receiving same;
   and

   d) summing the signals in corresponding cells, on a cell-by-cell basis, in the two complex image planes to cancel clutter signals therein and thereby form a clutter-free moving target image plane.

EN 979 026

5. The method according to claim 4 which additionally comprises the step of filtering extraneous signals from the returned target information signals and reducing same to a working frequency prior to processing thereof.

6. The method according to claim 4 which additionally comprises the step of converting the processed target scene information to digital form and thereafter digitally proceeding with the development of the clutter-free moving target image plane.

EN 979 026

FIG. 1

FIG. 2

European Patent
Office

**EUROPEAN SEARCH REPORT**

Application number

EP 80107153.1

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | <u>US - A - 3 735 400</u> (SLETTEN) <br><br> + Fig. 1,2; column 2, line 64 - column 4, line 66 + <br><br> -- <br><br> <u>GB - A - 2 007 933</u> (N.V. PHILIPS' GLOEILAMPENFABRIEKEN) <br><br> + Fig. 1; abstract + <br><br> -- <br><br> <u>DE - B - 1 285 578</u> (INTERNATIONAL STANDARD ELECTRIC) <br><br> + Fig. 1; column 3, line 5 - column 4, line 43; column 5, line 38 - column 6, line 28; claim 1 + <br><br> -- <br><br> <u>GB - A - 1 204 382</u> (TEXAS INSTRU-MENTS) <br><br> + Fig. 5; page 1, lines 31-40 + <br><br> ---- | 1,4 <br><br><br><br><br> 1,4,5 <br><br><br><br><br> 1,4,6 <br><br><br><br><br><br><br><br> 2 | G 01 S 13/52 <br> G 01 S 15/52 <br><br><br><br><br><br> **TECHNICAL FIELDS SEARCHED (Int. Cl.³)** <br><br><br> G 01 S 7/00 <br> G 01 S 13/00 <br> G 01 S 15/00 |

CATEGORY OF CITED DOCUMENTS

X: particularly relevant
A: technological background
O: non-written disclosure
P: intermediate document
T: theory or principle underlying
  the invention
E: conflicting application
D: document cited in the
  application
L: citation for other reasons

&: member of the same patent
  family,
  corresponding document

| X | The present search report has been drawn up for all claims | |
|---|---|---|
| Place of search <br> VIENNA | Date of completion of the search <br> 03-04-1981 | Examiner <br> DRÖSCHER |

EPO Form 1503.1 06.78